# EUROPEAN PATENT APPLICATION

(11) **EP 3 821 971 A1**
(43) Date of publication of application: **19.05.2021**
(21) Application number: 20208335.8
(22) Date of filing: 18.11.2020
(51) Int. Cl.: B01D 53/94, F01N 3/20, F01N 3/22, B01D 53/04, F01N 3/035, F01N 3/10

(54) **SYSTEM AND METHOD FOR NOX REMOVAL**

(30) Priority: 18.11.2019 NL 2024258; 18.06.2020 NL 2025852
(71) Applicant: VISSER & SMIT HANAB B.V., 3356 LJ Papendrecht (NL)
(72) Inventor: POT, Eric Jan, 7559 RL HENGELO (NL); WIERSMA, Leo, 2635 JK DEN HOORN (NL); IN 'T GROEN, Dennis, 3991 VJ HOUTEN (NL); DE WAARD, Eltjo, 3218 AD HEENVLIET (NL)
(74) Representative: Hoyng Rokh Monegier B.V.

(57) **Abstract**

A system and method for lowering NOx concentration in a gas flow comprising a gas inlet unit adapted for introducing a primary gas flow to form at least a portion of the gas flow; a first catalytic chamber, configured to receive the gas flow, comprising a reduction catalyst; a control means adapted to control the amount of a reductant that is introduced into the system or into the gas flow for exposure to the reduction catalyst; at least one heating means upstream of the reduction catalyst for heating at least a portion of the gas flow; a flow inducing means adapted to draw the gas flow through the system; a flow sensor adapted to measure flow rate of at least a portion of the gas flow; and a NOₓ sensor adapted to measure concentration of NOₓ in the measured gas flow, wherein the system is adapted to control the amount of reductant that is introduced by the control means based on the measured NOₓ concentration and gas flow rate.

## Description

### Field of the Invention

The invention relates to a system and method for lowering NOₓ concentration in a gas flow, and in particular in a gas flow comprising exhaust gas from one or more internal combustion engines.

### Description of the Background Art

A system comprising a reduction catalyst for lowering the NOₓ concentration in gas flows from diesel engines is known in the art.

US 10161281 B2 discloses an exhaust purification system including an engine, a lean NOₓ trap (LNT) mounted on an exhaust pipe and enabled to absorb nitrogen oxide contained in an exhaust gas at a lean air/fuel ratio or to release the adsorbed NOₓ at a rich air/fuel ratio and a selective catalytic reduction (SCR) catalyst to reduce the NOₓ. Oxygen sensors detect the concentration of oxygen in the exhaust gas and additional air is injected upstream of the SCR when the air/fuel ratio is rich.

US 2002/0148220 A1 discloses a diesel-powered vehicle provided with an SCR system which uses an external reducing reagent to convert NOₓ emissions on the reducing catalyst, whereby actual NOₓ emissions produced by the engine are filtered using a variable NOx time constant in turn correlated to the catalyst temperature.

WO 2015/109072 A1 discloses an apparatus for a gas turbine power plant that is allowed to operate continuously from 100% load down to approximately 40% load, wherein cumulative emissions are reduced through the addition of a series of CO oxidation catalysts and, if necessary, a high NO₂ reduction SCR catalyst.

US 2002/0104309 A1 discloses a deNOₓ apparatus with a NOₓ adsorber catalyst for adsorbing and releasing NOₓ, and an exhaust recirculating circuit for mixing an exhaust gas into intake air and an exhaust recirculating amount control means for recirculating a predetermined amount of the exhaust gas for reducing NOₓ when the adsorbed NOₓ accumulation amount is a predetermined value or less, and recirculating the aforementioned predetermined amount or more of exhaust gas to bring an air fuel ratio into a rich state when the adsorbed NOₓ accumulation amount exceeds a predetermined value and is to be released.

US 2012/0222406 A1 describes an exhaust purification system for an internal combustion engine capable of lean-burn driving, comprising an non-selective reduction (NSR) catalyst, an SCR disposed downstream of the NSR catalyst, a NOₓ sensor disposed downstream of the SCR and a rich-spike means for causing a rich-spike.

The systems described in the prior art are all systems that are designed for direct connection to a specific engine and optimized for that certain type of engine and for a certain gas flow rate, certain NOₓ concentration, certain size, etc. A disadvantage of such systems is that a system designed for one type of vehicle with a certain type of engine would operate inefficiently if used in a different vehicle. This is especially a problem for construction vehicles or non-road vehicles and machines, where each individually optimized system is built into the vehicle, taking up space and contributing to an increased weight of the vehicle. Additionally, any required maintenance of such a system would require that the vehicle or machine is taken out of service.

Another disadvantage of some prior art systems which use fuel injections, or other engine modifications to reduce NOₓ concentrations in exhaust gas, is that they compromise the performance of the engine.

Another disadvantage of some of the prior art systems is that the reduction catalysts only operate properly under essentially constant gas flow and within a certain temperature range. Engines that work under different loads emit exhaust gas at different flow rates and with different temperatures, depending on the engine efficiency. As a result, during a significant amount of time that the engine runs, the reduction catalyst does not optimally lower the NOₓ concentration in the exhaust gas due to fluctuations in gas flow and temperature. Moreover, some of the prior art systems are controlled such that when the engine is idling, the reduction catalysts are not operating, resulting in significant NOₓ emissions.

Another disadvantage of some of the prior art systems is that increases in engine load require a decreasing amount of reducing agents and vice versa. A sudden increase in engine load may thus result in an excess of reducing agent, which is then emitted to the environment as exhaust with adverse effects on the environment.

Thus, there is a particular need for a system or method to reduce NOₓ levels in exhaust gas from engines that does not have, or has to a lesser extent, one or more of the above-mentioned disadvantages of the prior art. In particular, there is a need to significantly reduce the NOₓ emission of non-road diesel engines that are used at e.g. construction sites that currently significantly suffer from one or more of these disadvantages.

### Brief Summary of the Invention

The present invention relates to a system for lowering NOₓ concentration in a gas flow comprising:
- a gas inlet unit adapted for introducing a primary gas flow to form at least a portion of the gas flow;
- a first catalytic chamber, configured to receive the gas flow, wherein the first catalytic chamber comprises a reduction catalyst and is adapted for contacting the gas flow with the reduction catalyst;
- a means adapted to introduce a controlled amount of a reductant into the system or into the gas flow for contact with the reduction catalyst;
- at least one heating means upstream of the reduction catalyst adapted to provide heating of at least a portion of the gas flow to achieve a temperature of the gas flow of at least 200 °C, preferably at least 250 °C, more preferably at least 300 °C;
- a flow inducing means adapted to draw the gas flow through the system, wherein the system is adapted to control rotational speed of the flow inducing means to control towards a predetermined flow rate of the gas flow in the system;
- a flow sensor adapted to measure flow rate of at least a portion of the gas flow; and
- a NOₓ sensor adapted to measure concentration of NOₓ in the measured gas flow, wherein the system is adapted to control the amount of reductant that is introduced by the means based on the measured NOₓ concentration and gas flow rate.

The primary gas flow is introduced to the system via the gas inlet unit and preferably comprises exhaust gas from one or more diesel engines, preferably from one or more diesel non-road engines. Non-road engines are engines that are used for other purposes than a motor vehicle that is used primarily on a public roadway. The primary gas flow most preferably comprises exhaust gas from non-road construction vehicles or construction equipment.

The gas inlet unit may be connected or in flow communication via a flexible coupling with the engine and may be connected or arranged in flow communication with a flow inducing means that is adapted to draw primary gas into the system.

In a preferred embodiment, the gas inlet unit comprises multiple inlets, wherein the gas inlet unit is adapted to introduce multiple gas flows to the system to form the gas flow in the system. These gas flows may comprise exhaust gas from one or more diesel engines, preferably from one or more diesel non-road engines.

The gas inlet unit may also be adapted to be a gas intake unit for ambient air, and as such may be connected or arranged in flow communication with a flow inducing means that is adapted to draw ambient air into the system. As such, NOₓ present in ambient air may also be reduced in the system.

Preferably, the reduction catalyst is a selective catalytic reduction (SCR) catalyst, because the SCR catalyst results in higher NOₓ conversion yields compared to other reduction catalysts and allows for a simpler configuration of the first catalytic chamber.

The reductant used for the catalytic reduction of NOₓ in the first catalytic chamber is preferably in the form of an aqueous urea solution. The injected urea breaks down in the hot gas stream. The water evaporates and becomes steam. The urea becomes carbon dioxide (CO₂), water (H₂O) and ammonia (NH₃). The ammonia attaches itself to the surface of the SCR catalyst and reacts with the NOₓ and forms nitrogen (N₂) and water (H₂O). A urea solution is safer to store than ammonia and is therefore the preferred reductant.

The reductant is preferably injected directly into the gas flow and preferably before the gas flow reaches the reduction catalyst as to enable mixing with the NOₓ in the gas flow for improved catalytic performance.

In a preferred embodiment, the system further comprises mixing elements adapted to mix the reductant through the gas flow prior to contact with the reduction catalyst for further improved catalytic performance.

The system is adapted to control the amount of reductant that is introduced based on the measured NOₓ concentration and the measured flow of the gas flow. The system is adapted to calculate to the required amount of reductant to reduce the NOₓ concentration to a predetermined value based on the measured NOₓ concentration in the gas flow and the measured volume flow.

An advantage of controlling the amount of reductant that is introduced based on the measured NOₓ concentration and flow of the gas flow is that it allows the system to work independently from the activity and temperature of the (diesel) engine(s) that are connected to the system. As such, even when the engine(s) are running on low load, at low activity, or at a low temperature or when the engine(s) are idling, and the flow rate and/or NOₓ concentration in the gas flow varies, the system can adjust to the varying parameters without compromising the performance of the engine(s).

The NOₓ sensor may measure the NOₓ concentration at any place in the gas flow. Preferably, the NOₓ sensor is placed at a point before the reductant is introduced into the system or into the gas flow.

The heating means may be placed in a separate heating chamber that is configured to receive at least a portion of at least one of the gas flows, and to heat this gas flow. The heating means is placed upstream of the first catalytic chamber so as to heat the gas flow prior to exposure to the catalyst. Heating the gas flow via the heating means may be necessary when the temperature of the gas flow in the system has a low temperature, or when ambient air is introduced to the system, as a gas flow comprising ambient air typically has a temperature below the optimum working temperature of the reduction catalyst. A minimum temperature of the heated gas flow of 200 °C is preferred, more preferably 250 °C, still more preferably 300 °C, in order to enable efficient functioning of the NOx reduction catalyst in the first catalytic chamber.

An additional advantage of a heating means is that it allows the system to work independently from the activity and temperature of the (diesel) engine(s) that are connected to the system. As such, even when the engine(s) are running on low load, at low activity, or at a low temperature or when the engine(s) are idling, and the resulting temperature of the exhaust gas is too low, or when heat loss occurs in e.g. the gas inlet units, the heating means heats the gas flow to the required temperature for efficient NOₓ reduction in the gas flow.

The system preferably also comprises a temperature controller adapted to control the temperature of the gas flow at the heating means or in the heating chamber. The temperature controller allows for first measuring the temperature of the gas flow prior to heating and compares this to the desired temperature setting. Advantageously, the temperature controller provides feedback as to whether the desired temperature has been reached. Another advantage of using a temperature controller is that energy for heating is used more efficiently. Furthermore, in the case that the gas flow already has a temperature above 200 °C, preferably above 250 °C, more preferably above 300 °C, the temperature controller can shut the heating off, as the desired temperature has already been reached.

In a preferred embodiment, the system comprises a temperature sensor downstream of the heater, wherein the system is adapted to control the injection of reductant based on the temperature of the gas flow. In this embodiment, the injection of reductant is only allowed when the temperature of the gas flow is at least 200 °C, preferably at least 220 °C. This serves as an extra precaution to prevent the use of excess reductant.

Preferably, the system also comprises NOₓ sensors adapted to measure the NOₓ concentration in the gas flow before and/or after contact with the reduction catalyst. The measured concentrations are then registered in a central control unit. Optionally, the rotational speed of the flow inducing means may be adapted to be controlled based on the information provided by the NOₓ sensors towards achieving a predetermined NOₓ conversion rate in the gas flow.

The flow inducing means can draw a gas flow into and/or through the system via a rotational movement. The flow inducing means is preferably a ventilation fan that is adapted to vary the rotational speed and as such control the gas flow that is drawn into and/or through the system. As such, the flow of the combined gas flow in the system may be controlled by varying the rotational speed of the ventilation fan. The flow inducing means is preferably heat-resistant.

Herein, the term "drawing a gas flow" can either refer to drawing a gas flow (*i.e.* sucking) or pushing a gas flow (*i.e.* blowing) through the system.

Preferably, the system further comprises a pressure sensor adapted to measure the pressure of the introduced gas flow upon entering the system, wherein the system is adapted to control the rotational speed of the flow inducing means on the basis of the measured pressure in the gas flow. As such, the risk of back pressure to the engine(s) can advantageously be prevented or minimized.

In a preferred embodiment, the flow inducing means is positioned directly downstream of the gas inlet unit, *i.e.* upstream of the heating means and the first catalytic chamber. An advantage of positioning the flow inducing means at this position is that it pushes the gas flow through the system. It was found that by pushing the gas flow through the system, back pressure to the engine(s) can be minimized and/or a more constant gas flow in the system can be achieved.

In a preferred embodiment, the flow inducing means is positioned directly downstream of the pressure sensor. As such, the system can control the rotational speed of the flow inducing means based on the measured pressure directly upstream of the flow inducing means, minimizing the risk of back pressure.

The system may further comprise a NOₓ adsorbent, preferably placed downstream of the reduction catalyst, that is adapted for adsorbing NOₓ from the gas flow. The advantage of using a NOₓ adsorbent is to achieve a higher NOₓ removal rate from the combined gas flow. In particular, placing the NOₓ adsorbent downstream of the first catalytic chamber results in adsorbing the last residues of NOₓ that were not yet converted by the reduction catalyst. When such adsorbents are placed upstream of the reduction catalyst, the adsorbents are exposed to higher concentrations of NOₓ, resulting in a fast saturation of the adsorbents. Good results may be obtained using activated carbon as NOₓ adsorbent.

It is preferred that the system comprises a second catalytic chamber downstream of the first catalytic chamber, configured to receive the gas flow, wherein the second catalytic chamber comprises an oxidation catalyst. The oxidation catalyst advantageously oxidizes excess reductant that has not reacted in the first catalytic chamber. This minimizes the exhaust of environmentally harmful reductant. Any oxidation catalyst known to the skilled worker may be used, but preferably a Diesel Oxidation Catalyst (DOC) is used, as this catalyst is designed for treating exhaust gas from diesel engines. The DOC is also capable of converting undesired CO and hydrocarbons in the exhaust gas into CO₂ and H₂O.

The system may further also comprise a particulate filter, preferably a diesel particulate filter (DPF), which is a self-generating soot filter configured to receive at least a portion of the gas flow. Preferably, the DPF is placed upstream of the reduction catalyst. In this way, soot particles are caught before they reach the reduction catalyst and block the reduction catalyst. The DPF is preferably placed downstream of or even in between the heating means, because the filters work better when the gas flow is heated to a temperature of at least 200 °C, preferably at least 250 °C, most preferably at least 300 °C.

An advantage of the system according to the invention is that it is configured to be placed in a single housing unit that can be adapted to be placed on a trailer and/or on a motorized vehicle and/or adapted to be arranged in flow communication with at least one internal combustion engine (*i.e.* "plug-and-play" configuration). As such, the system can be used on e.g. construction sites, where the system is connected to multiple machines or vehicles. When the system is placed on a trailer it can be towed to follow the machines or vehicles while lowering the NOₓ concentration in the exhaust gasses of these machines and vehicles. The system according to the invention may also be configured to be directly connected on or to the vehicle or machine or equipment.

Preferably, the system is adapted to operate in a plurality of predetermined modes, wherein the system is adapted to adjust the rotational speed of the flow inducing means, such as a ventilation fan, to set a different NOₓ removal rate at each mode.

Preferably all measured data in the system are captured in a control system that is also accessible online.

The system typically requires electricity to operate, which can be supplied either by a generator set or via a direct connection to the grid.

The invention further relates to a method for lowering NOₓ concentration in a gas flow in a system comprising the steps of:
- providing a gas flow;
- contacting the gas flow with a reduction catalyst in a first catalytic chamber;
- introducing a controlled amount of a reductant into the system or into the gas flow for contact with the reduction catalyst;
- heating at least a portion of the gas flow, at a point upstream of the reduction catalyst to achieve a temperature of the gas flow of at least 200 °C, preferably at least 250 °C, more preferably at least 300 °C;
- drawing the gas flow through the system via a flow inducing means;
- controlling rotational speed of the flow inducing means to control flow rate of the gas flow towards a predetermined flow rate;
- measuring flow rate of at least a portion of the gas flow;
- measuring concentration of NOₓ in the measured gas flow; and
- controlling the amount of reductant that is introduced in the gas flow based on the measured NOₓ concentration and gas flow rate.

Preferably, the gas flow comprises exhaust gas from one or more diesel engines. In this way the method can simultaneously lower the NOx concentration in the exhaust gas from multiple diesel engines. Preferably these engines are non-road engines found in construction vehicles and machines.

The gas flow may also comprise ambient air to allow reduction of NOₓ concentration in ambient air.

Preferably, the reduction of NOₓ is performed with a selective catalytic reduction (SCR) catalyst. The reductant is preferably in the form of a urea solution, as this a safe reductant to store. The reductant is preferably introduced to the reduction catalyst by injecting it into the gas flow (e.g. by spraying the urea solution from a nozzle) to ensure proper mixing with the NOₓ in the combined gas flow, but other methods may also be used. In a preferred embodiment, the reductant is mixed through the gas flow prior to contacting with the reduction catalyst.

The amount of reductant that is injected in the combined gas flow is based on a measured concentration of NOₓ in the gas flow and measured flow rate. This is advantageous because too much reductant would lead to the undesired presence of ammonia in the gas flow after catalytic reduction of NOₓ and if there is not enough reductant present on the catalyst, the NOₓ removal rate is decreased.

The method according to the invention may preferably also comprise contacting at least a portion of the gas flow with a particulate filter at some point before contacting the gas flow with a reduction catalyst, to filter out soot particles in the gas flow as to prevent these particulates to clog the SCR catalyst. The particulate filter is preferably a Diesel Particulate Filter, because these filters are designed for filtering soot particles from exhaust gases from diesel engines. Preferably, the contacting with the particulate filter occurs during or directly after heating, because the filters operate more effectively at increased temperatures.

The method according to the invention preferably also comprises the step of measuring pressure of at least a portion of the provided gas flow and controlling the rotational speed of the flow inducing means on the basis of the measured pressure in the gas flow to minimize back pressure.

The method according to the invention may also comprise contacting the gas flow with a NOₓ adsorbent at some point after contacting the gas flow with the reduction catalyst. An advantage is that the concentration of NOₓ in the gas flow is further lowered. NOₓ residues that were not converted in the reduction catalyst can be filtered out of the gas flow by adsorbing on the activated carbon. Good results are obtained with activated carbon as NOₓ adsorbent.

The method according to the invention preferably also comprises contacting the gas flow with an oxidation catalyst in a second catalytic chamber at some point after contacting the gas flow with a reduction catalyst in the first catalytic chamber. This oxidation catalyst is preferably a Diesel Oxidation Catalyst (DOC), because this catalyst is specifically designed to treat exhaust gases from diesel engines. Advantageously, the oxidation catalyst may convert unreacted reductant to prevent the exhaust of environmentally unfriendly reductant, e.g. ammonia.

Preferably the flow inducing means is a ventilation fan.

### Brief Description of the Drawings

The features and advantages of the invention will be appreciated upon reference to the following drawings, in which:
FIG. 1 is a simplified schematic diagram of one embodiment of the invention showing a system for lowering NOₓ concentration in a gas flow according to the invention; and
FIG. 2 is a simplified diagram of one embodiment of the invention, showing a method for lowering NOₓ concentration in a gas flow according to the invention; and
FIG. 3 is a simplified schematic diagram of one embodiment of the invention showing a system for lowering NOₓ concentration in a gas flow.

The drawings are intended for illustrative purposes only, and do not serve as restriction of the scope or the protection as specified in the claims.

### Detailed Description of the Invention

The following is a description of certain embodiments of the invention, given by way of example only and with reference to the drawings.

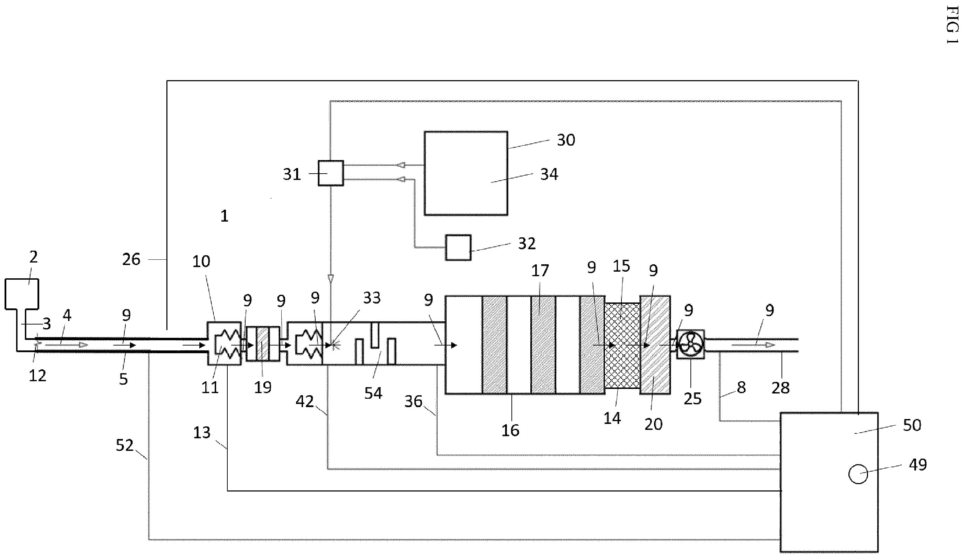

Figure 1 shows an embodiment of a system 1 for lowering NOₓ concentration in a gas flow according to the invention. The system 1 comprises a gas inlet unit 5 adapted for introducing a primary gas flow 4. In this embodiment, the gas inlet unit 5 is an exhaust gas intake and is connected to the exhaust pipe 3 of a diesel engine 2. The gas inlet unit 5 may also be connected to or arranged in a flow communication with more than one exhaust pipe deriving from different diesel engines. The connection is preferably done via flexible coupling 12, preferably via a chute.

The primary gas flow 4 that is introduced to the system 1 via the gas inlet unit 5 comprises exhaust gas from the diesel engine 2. The diesel engine may originate from vehicles or may be non-road engines originating from construction vehicles, machines, or equipment.

In the embodiment according to the invention shown in Figure 1, the primary gas flow 4 forms gas flow 9 in the system 1 and is in flow communication with the fan 25. Pressure sensor 52 measures the pressure of the incoming gas flow 9 which is communicated to the main control cabinet 50. On the basis of the measured pressure, control cabinet 50 predetermines the rotational speed of the fan 25 to set a flow of the gas flow and prevent back pressure into engine 2.

The gas flow 9 enters the heating chamber 10 comprising heating means 11, which is controlled by a temperature controller 13. The gas flow 9 is heated to a temperature of at least 200 °C, more preferably at least 250 °C, most preferably at least 300 °C. The gas flow 9 requires this minimum temperature as to ensure optimized catalytic activity in the first 16 and/or second 14 catalytic chamber and/or in the Diesel Particulate Filter 19. The temperature controller allows for first measuring the temperature of the gas flow 9 prior to heating and compares this to the desired temperature setting. An advantage of using a temperature controller 13 is that energy for heating is used more efficiently. The temperature controller 13 is controlled by the main control cabinet 50.

The heated gas flow 9 passes through the Diesel Particulate Filter 19 to filter out soot particles. In the embodiment according to Fig 1, the diesel particulate filter 19 is positioned in the heating chamber in between the heating elements 11.

The first catalytic chamber 16 comprises the selective catalytic reduction (SCR) catalyst 17 in the form of one or more catalyst beds. The invention is not limited to the SCR catalyst. Other suitable NOₓ reduction catalysts known to the skilled worker may be used, such as NOₓ storage-reduction NSR catalysts, zeolite-based catalysts, or any other suitable reduction catalyst. The reduction catalyst in the first catalytic chamber 16 is preferably a selective catalytic SCR reduction catalyst 17, because the SCR catalyst results in higher NOₓ conversion yields compared to other catalysts and allows for a simpler configuration of the catalytic chamber 16. The chamber may comprise the catalyst in the form of one or more catalyst beds 17. Preferably, the chamber is configured as fixed-bed reactors, as indicated in Figure 1. In this way, the gas flows through a catalyst bed, making the catalyst work more efficient.

The system 1 further comprises a urea storage tank 30 in which the reductant 34 for the SCR catalyst 17 is stored in the form of urea in demineralized water (32% urea following DIN 70070 ∼ Adblue). The urea solution 34 is injected into the gas flow 9 at injection unit 33 making use of dosing pump 31 and compressor 32 controlled by the main control cabinet 50 on the basis of the measured NOₓ concentration in the gas flow 9 by NOₓ sensor 42 and the flow measured by flow sensor 8. The urea storage tank 30 and/or dosing pump 31 and/or the compressor 32 may be present inside the first catalytic chamber 16 or may be located outside the first catalytic chamber 16, as long as they are present in the system 1 and as long as the reductant 34 is introduced for exposure to the same catalyst bed 17 as the flow 9 is exposed to, such that the catalyst 17 can reduce the NOₓ in the gas flow making use of the reductant 34.

In the embodiment according to Fig 1, the injection unit 33 is positioned outside the first catalytic chamber 16 and directly downstream of NOₓ sensor 42. The reductant 34 is preferably injected into the gas flow 9 prior to contacting with the first SCR catalyst bed 17. This enables proper conversion of urea into ammonia and enables mixing of the reductant 34 with the NOₓ in the gas flow 9 for improved catalytic performance of the SCR catalyst 17. In Fig 1, the gas flow 9 with the injected urea 34 flows via mixing elements 54, which are static mixers, to the first catalytic chamber. The mixing elements allow for better mixing of the reductant 34 through the gas flow 9.

The injected urea 34 breaks down in the hot gas stream 9. The water evaporates and becomes steam. The urea becomes carbon dioxide (CO₂),water (H₂O) and ammonia (NH₃). The ammonia attaches itself to the surface of the SCR catalyst and reacts with the NOₓ and forms nitrogen (N₂) and water (H₂O). The reductant 34 that is introduced to the SCR catalyst may be in the form of an aqueous urea solution but may also be anhydrous ammonia or aqueous ammonia or any other suitable reductant. Preferably, the reductant is in the form of an aqueous urea solution, because a urea solution is safer to store than ammonia.

The system comprises temperature sensor 36 downstream of the heater. The system 1 controls the injection of reductant also based on the measured temperature of the gas flow 9. The injection of reductant is only allowed when the temperature of the gas flow is at least 200 °C, preferably at least 220 °C. This serves as an extra precaution to prevent the use of excess reductant.

The second catalytic chamber 14, downstream of the first catalytic chamber, comprises one or more catalyst beds comprising the Diesel Oxidation Catalyst (DOC) 15. In the second catalyst chamber 14, the DOC 15 oxidizes excess ammonia and/or hydrocarbons and/or CO. In particular the exhaust of excess ammonia is harmful to the environment. The oxidation catalyst 15 in combination with the controlled injection of reductant 34 minimizes the exhaust of harmful ammonia.

The first catalytic chamber 16, second catalytic chamber 14, and heating chamber 10 may be individual single spaces but may also comprise several spaces or be divided up in several chambers that may be connected or be linked in flow communication with each other. The first catalytic chamber 16 and/or the second catalytic chamber 14 and/or the particulate filter 19 and/or the heating chamber 10 and/or mixing elements 54 may also all be combined in one big chamber comprising individual compartments.

Preferably, the system 1 also comprises a NOₓ sensor and/or temperature sensor downstream of the catalytic chambers. The measured parameters are sent to the main control cabinet 50 and serve as feedback signals for the performance of the SCR catalyst 17 in the first catalytic chamber 16. A too low temperature or a high concentration of NOₓ may indicate a malfunctioning in the system 1. A too low temperature may indicate that the SCR catalyst 17 has deactivated. When this is the case, the main control cabinet 50 gives a signal to stop the injection of reductant 34. In this way, a maintenance requirement signal may be provided by the system to the operator.

The gas flow 9 with a lowered NOₓ concentration enters the NOₓ adsorbent 20 comprising activated coal, that adsorbs NOₓ that has not been reduced in the first catalytic chamber 16 from the gas flow 9. The advantage of using a NOₓ adsorbent 20 is to achieve a higher NOₓ removal rate from the gas flow 9 yielding a gas flow with a lowered NOₓ concentration. In particular, placing the NOₓ adsorbent downstream of the first catalytic chamber 16 results in adsorbing the last residues of NOₓ that were not yet converted by the reduction catalyst 17. When such adsorbents are placed upstream of the reduction catalyst, the adsorbents are exposed to higher concentrations of NOₓ, resulting in a fast saturation of the adsorbents. The NOₓ adsorbent may be an activated carbon adsorbent.

The system 1 according the embodiment of Figure 1 may be placed in a single housing unit that can be placed on a trailer and/or on a motorized vehicle and/or can be arranged in flow communication with at least one diesel engine and/or can be directly placed on or connected to the equipment/machine.

The gas flow 9 with a lowered NOₓ concentration is blown out of the system 1 via air outlet unit 28 into the ambient air. The outlet unit 28 may be in the form of a chimney. Preferably, the gas outlet unit 28 comprises another NOₓ sensor and/or an NH₃-sensor. The measured parameters are sent to the main control cabinet 50 and serve as feedback signals for the performance of the SCR catalyst 17 and the NOₓ adsorbent 20. A high concentration of NOₓ may indicate saturation of the NOₓ adsorbent and a high concentration of NH3 may indicate a malfunctioning of the dosing pump 31 or deactivation of the SCR catalyst 17. In this way, a maintenance requirement signal may be provided by the system to the operator. For instance, in case the NOₓ concentration in gas flow 9 is higher than desired, the system 1 operates insufficiently and shall provide a red signal 49. Also, for instance, in the case that the NH₃ concentration is too high, not only a red signal 49 can be provided, but the system can also be stopped, because a high NH3 concentration is dangerous for the environment.

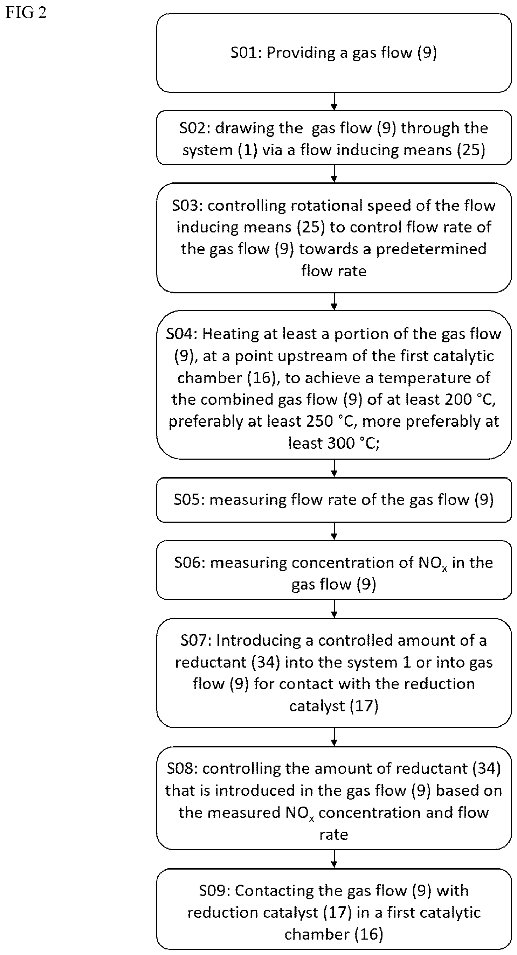

Figure 2 shows an embodiment of a method for lowering NOₓ concentration in a gas flow according to the invention comprising steps S01-S09.

Step S01 comprises providing a gas flow 9, comprising exhaust gas. The exhaust gas may originate from one or more internal combustion engines, such as diesel engines.

Step S02 comprises drawing the gas flow 9 through the system 1 via a flow inducing means 25.

Step S03 comprises controlling the rotational speed of the flow inducing means 25 to control flow rate of the gas flow towards a predetermined flow rate.

Step S04 comprises heating the gas flow 9 at a point upstream of the first catalytic chamber to achieve a temperature of at least 200 °C.

Step S05 comprises measuring the flow rate of the gas flow 9.

Step S06 comprises measuring the concentration of NOₓ in the gas flow 9.

Step S07 comprises introducing a controlled amount of a reductant 34 into the gas flow 9 for contact with the reduction catalyst 17.

Step S08 comprises controlling the amount of reductant 34 that is introduced in the gas flow 9 based on the measured NOₓ concentration and flow rate.

Step S09 comprises contacting the gas flow 9 with reduction catalyst 17 in a first catalytic chamber 16.

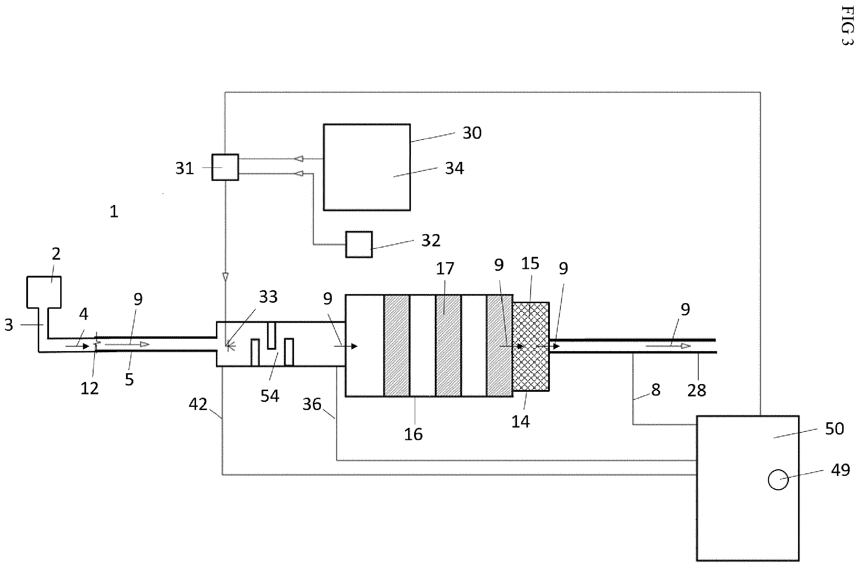

Figure 3 shows an embodiment of a system 1 for lowering NOₓ concentration in a gas flow according to the invention. The system 1 comprises a gas inlet unit 5 adapted for introducing a primary gas flow 4. In this embodiment, the gas inlet unit 5 is an exhaust gas intake and is connected to the exhaust pipe 3 of a diesel engine 2. The diesel engine may originate from a vehicle or may be a non-road engine originating from a construction vehicle, machine, or equipment. The gas inlet unit 5 is connected to or arranged in flow communication with only one exhaust pipe and the system is directly mounted onto the vehicle from which the exhaust originates. The connection is preferably done via flexible coupling 12, preferably via a chute.

In the embodiment according to the invention shown in Figure 3, the primary gas flow 4 comprises exhaust gas from the diesel engine 2 and forms gas flow 9 in the system 1.

The first catalytic chamber 16 comprises the selective catalytic reduction (SCR) catalyst 17 in the form of one or more catalyst beds. The invention is not limited to the SCR catalyst. Other suitable NOₓ reduction catalysts known to the skilled worker may be used, such as NOₓ storage-reduction NSR catalysts, zeolite-based catalysts, or any other suitable reduction catalyst. The reduction catalyst in the first catalytic chamber 16 is preferably a selective catalytic SCR reduction catalyst 17, because the SCR catalyst results in higher NOₓ conversion yields compared to other catalysts and allows for a more simple configuration of the catalytic chamber 16. The chamber may comprise the catalyst in the form of one or more catalyst beds 17. Preferably, the chamber is configured as fixed-bed reactors, as indicated in Figure 3. In this way, the gas flows through a catalyst bed, making the catalyst work more efficient.

The system 1 further comprises a urea storage tank 30 in which the reductant 34 for the SCR catalyst 17 is stored in the form of urea in demineralized water (32% urea following DIN 70070 ∼ Adblue). The urea solution 34 is injected into the gas flow 9 at injection unit 33 making use of dosing pump 31 and compressor 32 controlled by the main control cabinet 50 on the basis of the measured NOₓ concentration in the gas flow 9 by NOₓ sensor 42 and the flow measured by flow sensor 8. The urea storage tank 30 and/or dosing pump 31 and/or the compressor 32 may be present inside the first catalytic chamber 16 or may be located outside the first catalytic chamber 16, as long as they are present in the system 1 and as long as the reductant 34 is introduced for exposure to the same catalyst bed 17 as the flow 9 is exposed to, such that the catalyst 17 can reduce the NOₓ in the gas flow making use of the reductant 34.

In the embodiment according to Fig 3, the injection unit 33 is positioned outside the first catalytic chamber 16 and directly downstream of NOₓ sensor 42. The reductant 34 is preferably injected into the gas flow 9 prior to contacting with the first SCR catalyst bed 17. This enables proper conversion of urea into ammonia and enables mixing of the reductant 34 with the NOₓ in the gas flow 9 for improved catalytic performance of the SCR catalyst 17. In Fig 3, the gas flow 9 with the injected urea 34 flows via mixing elements 54, which are static mixers, to the first catalytic chamber. The mixing elements allow for better mixing of the reductant 34 through the gas flow 9.

The injected urea 34 breaks down in the hot gas stream 9. The water evaporates and becomes steam. The urea becomes carbon dioxide (CO₂),water (H₂O) and ammonia (NH₃). The ammonia attaches itself to the surface of the SCR catalyst and reacts with the NOₓ and forms nitrogen (N₂) and water (H₂O). The reductant 34 that is introduced to the SCR catalyst may be in the form of an aqueous urea solution but may also be anhydrous ammonia or aqueous ammonia or any other suitable reductant. Preferably, the reductant is in the form of an aqueous urea solution, because a urea solution is safer to store than ammonia.

The system comprises temperature sensor 36. The system 1 controls the injection of reductant also based on the measured temperature of the gas flow 9. The injection of reductant is only allowed when the temperature of the gas flow is at least 200 °C, preferably at least 220 °C. This serves as an extra precaution to prevent the use of excess reductant. This is particularly important in the embodiment of Fig 3, wherein the system does not comprise a heater. In the embodiment of Fig 3, the system is in direct flow connection with the exhaust pipe 3 of the diesel engine 2. The gas flow therefore often has a temperature high enough for operation of the SCR catalyst. The absence of a heater also leads to a more light-weight system 1 that can be more easily mounted on *e.g.* a vehicle. Alternatively, when low weight is not a high priority, a heater can advantageously be added to the system. In combination with the temperature sensor, the temperature of the gas flow in the system can be better controlled.

The second catalytic chamber 14, downstream of the first catalytic chamber, comprises one or more catalyst beds comprising the Diesel Oxidation Catalyst (DOC) 15. In the second catalyst chamber 14, the DOC 15 oxidizes excess ammonia and/or hydrocarbons and/or CO. In particular the exhaust of excess ammonia is harmful to the environment. The oxidation catalyst 15 in combination with the controlled injection of reductant 34 minimizes the exhaust of harmful ammonia.

It is noted that according to the invention, the first catalytic chamber 16, second catalytic chamber 14, and heating chamber 10 may be individual single spaces but may also comprise several spaces or be divided up in several chambers that may be connected or be linked in flow communication with each other. The first catalytic chamber 16 and/or the second catalytic chamber 14 and/or the particulate filter 19 and/or the heating chamber 10 and/or mixing elements 54 may also all be combined in one big chamber comprising individual compartments.

Preferably, the system 1 also comprises a NOₓ sensor and/or temperature sensor downstream of the catalytic chambers. The measured parameters are sent to the main control cabinet 50 and serve as feedback signals for the performance of the SCR catalyst 17 in the first catalytic chamber 16. A too low temperature or a high concentration of NOₓ may indicate a malfunctioning in the system 1. A too low temperature may indicate that the SCR catalyst 17 has deactivated. When this is the case, the main control cabinet 50 gives a signal to stop the injection of reductant 34. In this way, a maintenance requirement signal may be provided by the system to the operator.

The system 1 according the embodiment of Figure 1 may be placed in a single housing unit that can be placed on a trailer and/or on a motorized vehicle and can be arranged in flow communication with one diesel engine and can be directly placed on or connected to the equipment/machine.

The gas flow 9 with a lowered NOₓ concentration is blown out of the system 1 via air outlet unit 28 into the ambient air. The outlet unit 28 may be in the form of a chimney. Preferably, the gas outlet unit 28 comprises another NOₓ sensor and/or an NH₃-sensor. The measured parameters are sent to the main control cabinet 50 and serve as feedback signals for the performance of the SCR catalyst 17 and the NOₓ adsorbent 20. A high concentration of NOₓ may indicate saturation of the NOₓ adsorbent and a high concentration of NH3 may indicate a malfunctioning of the dosing pump 31 or deactivation of the SCR catalyst 17. In this way, a maintenance requirement signal may be provided by the system to the operator. For instance, in case the NOₓ concentration in gas flow 9 is higher than desired, the system 1 operates insufficiently and shall provide a red signal 49. Also, for instance, in the case that the NH3 concentration is too high, not only a red signal 49 can be provided, but the system can also be stopped, because a high NH3 concentration is dangerous for the environment.

The description above is intended to be illustrative, not limiting. It will be apparent to the person skilled in the art that various alternative and equivalent embodiments are possible for implementing the invention without departing from the scope of the claims set out below.

## Claims

1. A system (1) for lowering NOₓ concentration in a gas flow (9), the system comprising:
a gas inlet unit (5) adapted to introduce a primary gas flow (4) to form at least a portion of the gas flow (9);
a first catalytic chamber (16), configured to receive the gas flow (9), wherein the first catalytic chamber (16) comprises a reduction catalyst (17) and is adapted for contacting the gas flow (9) with the reduction catalyst (17);
means (31) adapted to introduce a controlled amount of a reductant (34) into the system (1) or into the gas flow (9) for contact with the reduction catalyst (17);
at least one heating means (11) upstream of the reduction catalyst (17) adapted to provide heating of at least a portion of the gas flow (9) to achieve a temperature of the gas flow (9) of at least 200 °C, preferably at least 250 °C, more preferably at least 300 °C;
a flow inducing means (25), adapted to draw the gas flow (9) through the system (1), wherein the system (1) is adapted to control rotational speed of the flow inducing means (25) to control towards a predetermined flow rate of the gas flow (9) in the system (1);
a flow sensor (8) adapted to measure flow rate of at least a portion of the gas flow (9); and
a NOₓ sensor (42) adapted to measure concentration of NOₓ in the measured gas flow (9), wherein the system (1) is adapted to control the amount of reductant (34) that is introduced by the means (31) based on the measured NOₓ concentration and gas flow rate.

2. The system (1) of claim 1, wherein the gas flow (9) comprises exhaust gas from one or more diesel engines (2).

3. The system (1) of any one of the preceding claims, wherein the reduction catalyst (17) is a selective catalytic reduction catalyst, and the reductant (34) is in the form of an aqueous urea solution.

4. The system (1) of any one of the preceding claims, wherein the reductant (34) is introduced into the gas flow (9) for contact with the reduction catalyst (17);

5. The system (1) of any of the preceding claims, wherein system (1) further comprises a pressure sensor (52) adapted to measure pressure of the gas flow (9) upon entering the system (1) at the gas inlet unit (5), and wherein the system (1) is adapted to control the rotational speed of the flow inducing means (25) on the basis of the measured pressure in the gas flow (9).

6. The system (1) of claim 11, wherein the flow inducing means (25) is positioned downstream of the pressure sensor (52).

7. The system (1) of any one of the preceding claims, further comprising a second catalytic chamber (14) downstream of the first catalytic chamber (16) configured to receive the gas flow (9), wherein the second catalytic chamber (14) comprises an oxidation catalyst (15), preferably a Diesel Oxidation Catalyst.

8. The system (1) of any one of the preceding claims, wherein the system (1) is adapted to operate at a plurality of predetermined modes, wherein the system (1) is adapted to adjust the rotational speed of the flow inducing means (25) to set a different NOx removal rate at each mode.

9. A method for lowering NOₓ concentration in a gas flow (9) in a system (1), comprising the steps of:
providing a gas flow (9);
contacting the gas flow (9) with a reduction catalyst (17) in a first catalytic chamber (16);
introducing a controlled amount of a reductant (34) into the system (1) or into the gas flow (9) for contact with the reduction catalyst (17);
heating at least a portion of the gas flow (9), at a point upstream of the reduction catalyst (17), to achieve a temperature of the gas flow (9) of at least 200 °C, preferably at least 250 °C, more preferably at least 300 °C;
drawing the gas flow (9) through the system (1) via a flow inducing means (25);
controlling rotational speed of the flow inducing means (25) to control flow rate of the gas flow (9) towards a predetermined flow rate;
measuring flow rate of at least a portion of the gas flow (9);
measuring concentration of NOₓ in the measured gas flow (9); and
controlling the amount of reductant (34) that is introduced in the gas flow (9) based on the measured NOₓ concentration and gas flow rate.

10. The method according to claim 9, wherein the gas flow (9) comprises exhaust gas from one or more diesel engines (2).

11. The method according to any one of claims 9-10, wherein the reduction catalyst (17) is a selective catalytic reduction catalyst.

12. The method according to any one of claims 9-11, wherein the reductant (34) is in the form of an aqueous urea solution.

13. The method according to any one of claims 9-12, further comprising the step of mixing the reductant (34) through the gas flow (9) prior to contacting with the reduction catalyst (17).

14. The method according to any one of claims 9-13, further comprising the step of measuring pressure of the provided gas flow (9) and controlling the rotational speed of the flow inducing means (25) on the basis of the measured pressure in the gas flow (9).

15. A system (1) for lowering NOₓ concentration in a gas flow (9), the system comprising:
a gas inlet unit (5) adapted to introduce a primary gas flow (4) to form at least a portion of the gas flow (9);
a first catalytic chamber (16), configured to receive the gas flow (9), wherein the first catalytic chamber (16) comprises a reduction catalyst (17) and is adapted for contacting the gas flow (9) with the reduction catalyst (17);
means (31) adapted to introduce a controlled amount of a reductant (34) into the system (1) or into the gas flow (9) for contact with the reduction catalyst (17);
a flow sensor (8) adapted to measure flow rate of at least a portion of the gas flow (9); and
a NOₓ sensor (42) adapted to measure concentration of NOₓ in the measured gas flow (9), wherein the system (1) is adapted to control the amount of reductant (34) that is introduced by the means (31) based on the measured NOₓ concentration and gas flow rate.
